(19) Europäisches Patentamt
European Patent Office
Office européen des brevets

(11) EP 4 530 661 A1

(12) EUROPEAN PATENT APPLICATION

(43) Date of publication:
02.04.2025 Bulletin 2025/14

(51) International Patent Classification (IPC):
G01S 7/282 (2006.01)    G01S 7/40 (2006.01)
G01S 13/02 (2006.01)

(21) Application number: 23199885.7

(22) Date of filing: 26.09.2023

(52) Cooperative Patent Classification (CPC):
G01S 13/0209; G01S 7/282; G01S 7/4008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Acconeer AB
211 77 Malmö (SE)**

(72) Inventors:
• **Månsson, Erik
211 33 MALMÖ (SE)**
• **Axholt, Andreas
224 74 LUND (SE)**

(74) Representative: **Lind Edlund Kenamets
Intellectual Property AB
Kungsportsavenyn 25
411 36 Göteborg (SE)**

(54) **A METHOD FOR ESTIMATING A CENTER FREQUENCY OF A WAVELET**

(57) There is provided a method for estimating a center frequency of a wavelet. The method comprises performing a sequence of measurements to obtain a sequence of samples, wherein each measurement comprises obtaining a respective sample of a convolution of a first wavelet, whose center frequency is to be estimated, and a second wavelet generated respectively by a first second wavelet generator. The second wavelet has a duration smaller than a middle portion of substantially constant center frequency of the first wavelet. A timing offset between the first and second wavelet is varied between the measurements such that each sample represents a respective point of the convolution, and such that the sequence of samples represents a portion of substantially constant center frequency of the convolution. Un-wrapped phase values are obtained by unwrapping a sequence of instantaneous phase values estimated from the sequence of samples. The center frequency of the first wavelet is estimated as the time rate of change of the sequence of un-wrapped phase values.

*Fig. 3b*

EP 4 530 661 A1

**Description**

TECHNICAL FIELD

The present invention generally relates to a method for estimating a center frequency of a wavelet, and an electronic device.

BACKGROUND

There is a growing interest in radar technology enabling short range and high precision measurements in industrial, medical, security as well as consumer applications. Non-limiting example applications include ranging and positioning, presence and gesture detection, and investigation of material properties such as thickness, size, dielectric properties, material composition etc.

In pulse-based radar systems the send time may be kept short, which in turn enables a lower power consumption. Ultra-wideband, UWB, pulses (e.g. with a bandwidth of a few GHz or more) may as an example allow pulse durations in the order of nanoseconds, hundreds of picoseconds or shorter. In a pulse-based radar system a radar pulse ("wavelet") is transmitted to be reflected off a radar target, wherein the reflected radar pulse is received and analyzed, e.g. to determine a time-of-flight of the radar pulse, and/or other characteristics of the reflected pulse such as amplitude and phase. Pulse-based radar systems operating in the millimetre band, or mmWave band, (herein considered to correspond to the spectrum extending from 30 GHz to 300 GHz) are of particular interest as the short wavelength of mmWave radar wavelets facilitates high accuracy measurements in short range applications.

Precise on-chip measurements of the center frequency of generated radar wavelets is an important function of a radar device, both for facilitating precise measurements and for device calibration (e.g. to ensure complying with regulatory spectrum allocations). In order to sample the wavelet signal to be measured, the sampling circuit (e.g. the ADC) must have a sufficient sample rate, i.e. bandwidth, to be able to measure the signal S without undersampling or aliasing. This becomes increasingly challenging at the high frequencies of mmWave signals and large bandwidth of UWB signals. Although wideband ADCs do exist, they may not be feasible to implement in compact and power-efficient devices.

SUMMARY

It is an object of the present invention to provide a method enabling center frequency estimation of a wavelet with reduced bandwidth requirements for the sampling circuitry, which may be implemented on-chip in compact and power-efficient devices. In particular, it is an object to enable such center frequency estimation also for UWB wavelets in the mmWave band.

Hence, according to a first aspect there is provided a method for estimating a center frequency of a wavelet, the method comprising:

> performing a sequence of measurements to obtain a sequence of samples, wherein each measurement comprises obtaining a respective sample of a convolution of a first wavelet generated by a first wavelet generator and a second wavelet generated by a second wavelet generator,
>
>> wherein the first wavelet is the wavelet whose center frequency is to be estimated and comprises an initial portion having an increasing amplitude, an end portion having a decreasing amplitude, and a middle portion having a substantially constant center frequency,
>> wherein the second wavelet has a duration smaller than a duration of the middle portion of the first wavelet, and wherein a timing offset between the first and second wavelet is varied between the measurements such that each sample represents a respective point of the convolution, and such that the sequence of samples represents a portion of substantially constant center frequency of the convolution;
>
> estimating a sequence of instantaneous phase values from the sequence of samples;
> unwrapping the sequence of instantaneous phase values to obtain a sequence of un-wrapped phase values; and
> estimating the center frequency of the first wavelet as the time rate of change of the sequence of un-wrapped phase values.

According to a second aspect there is provided an electronic device comprising:

> a first wavelet generator;
> a second wavelet generator;

a sampling circuit;

wherein the electronic device is configured to perform a sequence of measurements to obtain a sequence of samples, wherein each measurement comprises obtaining, by the sampling circuit, a respective sample of a convolution of a first wavelet generated by the first wavelet generator and a second wavelet generated by the second wavelet generator,

wherein the first wavelet is the wavelet whose center frequency is to be estimated and comprises an initial portion having an increasing amplitude, an end portion having a decreasing amplitude, and a middle portion having a substantially constant center frequency,

wherein the second wavelet has a duration smaller than a duration of the middle portion of the first wavelet, and

wherein a timing offset between the first and second wavelet is varied between the measurements such that each sample represents a respective point of the convolution, and such that the sequence of samples represents a portion of substantially constant center frequency of the convolution;

the electronic device further comprising a signal processing circuit configured to:

estimate a sequence of instantaneous phase values from the sequence of samples;
unwrap the sequence of instantaneous phase values to obtain a sequence of un-wrapped phase values; and
estimate the center frequency of the first wavelet as the time rate of change of the sequence of unwrapped phase values.

The present invention is based on the idea that rather than directly sampling the first wavelet whose frequency is to be measured, the center frequency may be estimated from a sequence of samples representing a portion of a convolution between the first wavelet and the second wavelet ("probe wavelet"). This in turn allows the sequence of samples to obtained in a time-diluted fashion, i.e. by repeatedly performing a "convolution measurement" while varying a timing offset (i.e. a relative delay) between the convolved signals, i.e. the first wavelet and the probe signal.

Underlying this approach is the mathematical relationship that a convolution of a first periodic signal $A(t)$ of period $T$ (i.e. $A(t) = A(t + T)$) with any other signal $B(t)$ will yield a convolved signal $C(t) = (A * B)(t)$ that is also periodic with the period $T$ of the first signal. Accordingly, the frequency of the first signal $x(t)$ may be obtained as the frequency $f = 1/T$ of the convolved signal $z(t)$. While this relationship, in strict mathematical sense applies to infinitely periodic signals, it also holds true, at least approximately, to points $t_i$ of the convolved signal $z(t = t_i)$ for which the other signal $B(t)$ (corresponding to the probe wavelet) overlaps only a portion of substantially constant frequency of the first signal $A(t)$ (corresponding to the first wavelet). The portion of substantially constant frequency of the convolution may in the following for conciseness be referred to as the constant frequency portion or the middle portion of the convolution. According to the method and device of the first and second aspects, this is reflected in that the different timing offsets of the measurements are such that each sample represents a respective point (i.e. time instant) of the portion of substantially constant center frequency of the convolution. Hence, the initial and end portions of the first wavelet, which for typical wavelet generators tend to be characterized by unstable center frequency, are excluded from the convolution measurements used to obtain the sequence of samples on which the frequency estimation is based.

Moreover, in view of the above, the frequency estimation need not rely on precise control or knowledge of the characteristics of the probe wavelet, other than in ensuring that for none of the samples does the second / probe wavelet temporally overlap the inner or end portions of the first wavelet.

Thus, having obtained the sequence of samples representing a portion of substantially constant center frequency of the convolution, the center frequency of the first wavelet may be estimated by performing phase unwrapping and determining the time rate of change of the resulting sequence of un-wrapped phase values.

By the term "wavelet" is here meant a pulsed electro-magnetic oscillating signal having a carrier frequency (the center frequency of the wavelet) and a limited temporal extension, each wavelet including a plurality of oscillations or periods within the limited temporal extension. That is each "pulse" comprises a plurality of oscillations or periods in accordance with the carrier/center frequency of the wavelet.

By the term "sample of a convolution" (e.g. with reference to the first wavelet and the second/probe signal) is here meant a sample (digital or analog) of a given point of a waveform of the convolution. Due to the time-diluted sampling approach, the waveform of the full convolution need not as such be produced and then sampled, but rather a single sample representing a given point of the waveform may be obtained in each convolution measurement.

By the term "unwrap" with respect to phase values is here meant transforming the relative instantaneous phase values (wrapped from $-\pi$ to $\pi$) of the waveform represented by the sequence of samples to absolute instantaneous phase values (by adding multiples of $\pm 2\pi$ to the relative instantaneous phase values).

In some embodiments of the first method aspect, each measurement of the sequence of measurements comprises:

generating the first wavelet by the first wavelet generator and the second wavelet by the second wavelet generator;

mixing and integrating the first wavelet and the second wavelet to obtain an integrated mixing product; and

sampling the integrated mixing product to obtain a sample.

Correspondingly, in some embodiments of the second device aspect, the electronic device further comprises a mixer and integrator circuit, and wherein each measurement comprises:

generating the first wavelet by the first wavelet generator and the second wavelet by the second wavelet generator;

mixing and integrating the first wavelet and the second wavelet, by the mixer and integrator circuit, to obtain an integrated mixing product; and

sampling, by the sampling circuit, the integrated mixing product to obtain a sample.

By the term "mixing" is here meant RF mixing / frequency mixing (e.g. by a mixer portion of the mixer and integrator circuit) of two signals (e.g. the first wavelet and the second signal) to obtain a mixing product.

By the term "integrating" is here meant an integration (e.g. by an integrator portion of the mixer and integrator circuit) of a signal (e.g. the mixing product of the first wavelet and the second signal) to obtain a time integral of the signal (e.g. an integrated mixing product). The integration hence converts the mixing product of each measurement into a respective integrated mixing product. The integrated mixing product may in particular be a DC signal. The respective mixing product should be integrated over its full duration. That is, the time period during which the mixing product is accumulated (e.g. by the integrator) should cover the full duration of the mixing product.

By the term "mixer and integrator circuit" is here meant any circuit portion allowing frequency mixing and integration of the mixing product. A mixer and integrator circuit may comprise a discrete circuit portion providing the mixing and a discrete integrator portion coupled to an output of the mixing circuit portion and providing the integration. However, a mixer and integrator circuit may also be realized by a common circuit portion or element providing, simultaneously, the mixing and integration.

Each sample may thus be obtained by simply mixing and integrating the first wavelet and the second wavelet, with a given timing offset between the first and second wavelets. By varying the timing offsets between the measurements, samples representing different points or time instants of the waveform of the convolution may thus be obtained. E.g., by varying the timing offset between the first through fourth radar measurements, a relative time of arrival of the first wavelet at the mixer and integrator circuit, with respect to a time of arrival of the second wavelet at the mixer and integrator circuit may be varied between the measurements.

The measurements of the sequence of measurements are here to be understood as separate and sequential measurements, each comprising: generating a respective instance of the first wavelet and a respective instance of the second wavelet; mixing and integrating the respective instances of the first and second wavelets to obtain a respective integrated mixing product, and sampling the respective integrated mixing product to obtain the respective sample.

In some embodiments, the timing offset between the first and second wavelets is varied between the sequence of measurements such that the second wavelet presents a different overlap with the middle portion of the first wavelet in each measurement. Each sample may thus represent a different point of the convolution.

In some embodiments, the timing offset is varied over a range such that the sequence of samples spans at least one period of the convolution.

Basing the frequency estimation on samples spanning one or more periods of the convolution may contribute to the reliability and accuracy of the measurement.

In some embodiments, estimating the sequence of instantaneous phase values comprises estimating a sequence of in-phase and quadrature-phase components from the sequence of samples.

In some embodiments, the middle portion of the first wavelet further has a substantially uniform amplitude. This may improve the reliability and simplicity of the frequency estimation by reducing the number of variable parameters in the measurements. Amplitude variations in the middle portion of the first wavelet may otherwise tend to increase the uncertainty of the frequency estimation as the modulation may result in a broadening of the carrier frequency.

In some embodiments, a center frequency of the first wavelet is unstable in the initial portion and/or end portion. As the sequence of samples on which the center frequency estimation is based are obtained from the convolution measurements from the middle portion of the first wavelet, frequency instability in the initial and/or end portion will not adversely affect the frequency estimation. A related advantage is that the requirements on the frequency stability of the first wavelet generator during start-up and shut-down may be reduced.

In some embodiments, the first wavelet generator has a configurable duration. Hence, the duration of the first wavelet may be increased for the purpose of facilitating the frequency estimation, and after the frequency has been estimated, be reduced to a duration suitable for the particular application (e.g. radar measurement).

In some embodiments, a frequency spectrum of the second wavelet comprises a band overlapping the center frequency of the first wavelet. This will reliably produce a peak in a frequency distribution of a convolution between such first and second wavelets, at a frequency matching the center frequency of the first wavelet.

In some embodiments, the second wavelet presents a substantially triangular or trapezoidal envelope, or the second wavelet comprises a frequency-chirp. These example implementations allows providing a second wavelet with a relatively broad frequency band of non-zero energy, to be mixed with the first wavelet, thus facilitating providing an overlap with the center frequency of the first wavelet.

In some embodiments, the method further comprises tuning a resonance frequency of the first wavelet generator responsive to the estimated center frequency deviating from a reference frequency or reference frequency band.

The frequency estimate may thus be used for adjusting the resonance frequency of the first wavelet generator so as to produce the first wavelets with a center frequency meeting the reference frequency or falling within the reference frequency band (e.g. to provide a desired measurement accuracy and/or for spectrum compliance).

In some embodiments, the first and second wavelet generators are comprised in a radar device.

In some embodiments, the first wavelet generator is configured to generate a wavelet for transmission from the radar device.

BRIEF DESCRIPTION OF THE DRAWINGS

This and other aspects of the present invention will now be described in more detail, with reference to the appended drawings showing embodiments of the present invention.

Fig. 1 schematically shows an electronic device according to an implementation.
Fig. 2 is a flow chart of a method for estimating a frequency of a wavelet.
Fig. 3a-b depict example waveforms of first and second wavelets and a convolution between the first and second wavelets.
Fig. 4 depict waveforms and frequency spectrums of further examples of first and second wavelets and a convolution between the first and second wavelets.
Fig. 5 depict waveforms and frequency spectrums of further examples of first and second wavelets and a convolution between the first and second wavelets.

DETAILED DESCRIPTION

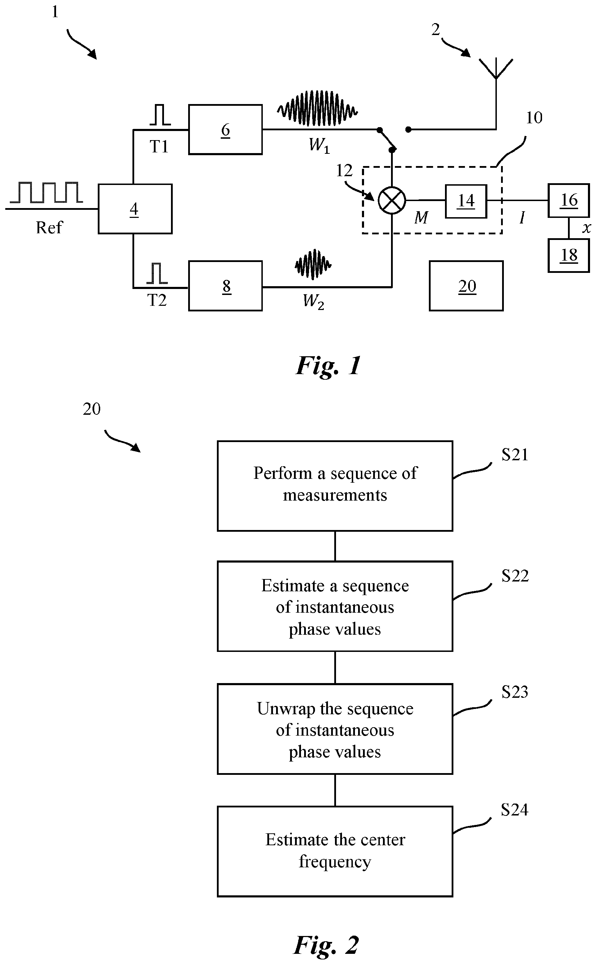

Fig. 1 illustrates an electronic device 1 in which embodiments of the present invention may be implemented for the purpose of enabling center frequency estimation of wavelets. The designation "carrier" or "center" in connection with "frequency" may in the following be omitted for conciseness. Hence, the wording "frequency of a wavelet" or "frequency estimation" is in the following to be understood as referring to the carrier/center frequency, unless indicated otherwise.

The electronic device 1 comprises a first wavelet generator 6. The first wavelet generator 6 is configured to generate a first wavelet $W_1$ which is the wavelet whose center frequency is to be estimated. The electronic device 1 further comprises a second wavelet generator 8. The second wavelet generator 8 is configured to generate a second wavelet $W_2$. As set out herein, the second wavelet $W_2$ is used as a probe wavelet to facilitate the estimation of the center frequency first wavelet $W_1$.

To facilitate the frequency estimation, the first and the second wavelet generators 6, 8 may each be respective coherent wavelet generators. That is, the first wavelet generator 6 may be configured to coherently generate instances of the first wavelet $W_1$ such that the first wavelet generator 6 may generate substantially uniform instances of the first wavelet $W_1$. By substantially uniform instances of the first wavelet $W_1$ is here meant that the instances have substantially matching waveforms, e.g. in terms of initial phase, frequency, bandwidth and amplitude. Instances of the first wavelet $W_1$ generated by first wavelet generator 6 at different points in time may thus present phase-coherence with respect to each other. This discussion applies correspondingly to the second wavelet generator 8 and the instances of the second wavelets $W_2$. For convenience, the label $W_1$ may in the following be used both with reference to the (waveform of the) first wavelet as well as instances thereof. Correspondingly, the label $W_2$ may in the following be used both with reference to the (waveform of the) second wavelet as well as instances thereof.

The first and second wavelet generators 6, 8 may each be mmWave wavelet generators, i.e. be capable of generating wavelets with center frequencies in the mmWave band. Non-limiting examples of frequency bands within which the center frequencies of the wavelets $W_1$, $W_2$ may be generated include 57-71 GHz, 57-64 GHz and 77-81 GHz. The first and second wavelet generators 6, 8 may further be capable to generate the wavelets $W_1$, $W_2$ as UWB wavelets, e.g. with bandwidths of about 1 GHz to about 14 GHz (e.g. measured at FWHM). It is here to be noted that a capability of a wavelet generator to generate UWB wavelets does not preclude the possibility of generating smaller bandwidth (i.e. non-UWB) wavelets. As further will become apparent from the following discussion, to facilitate the frequency estimation of the first wavelet $W_1$, the duration of the second wavelet $W_2$ is smaller than the duration of the first wavelet $W_1$, more specifically shorter than the duration of a middle / constant frequency portion of the first wavelet $W_1$. Hence, the bandwidths of the first and second wavelets $W_1$, $W_2$ may be different. It is further to be noted that, while the ability to generate UWB wavelets (e.g.

mmWave wavelets) may be useful in the particular application for which the electronic device 1 is intended to be used (e.g. for high accuracy measurements in short range radar applications, discussed below), the first and second wavelets $W_1$, $W_2$ need not for the purpose of the frequency estimation be UWB wavelets. For instance, as will be further elaborated upon below, a duration of wavelets generated by the first wavelet generator 6 may be configurable, wherein the first wavelet generator 6 may be configured to generate the first wavelet $W_1$ of duration $\tau_1$ (e.g. a UWB or non-UWB wavelet) when performing frequency estimation and generate a third wavelet $W_3$ of a same center frequency as the wavelet $W_1$ but a shorter duration $\tau_3 < \tau_1$ (e.g. a UWB wavelet) when performing radar measurements.

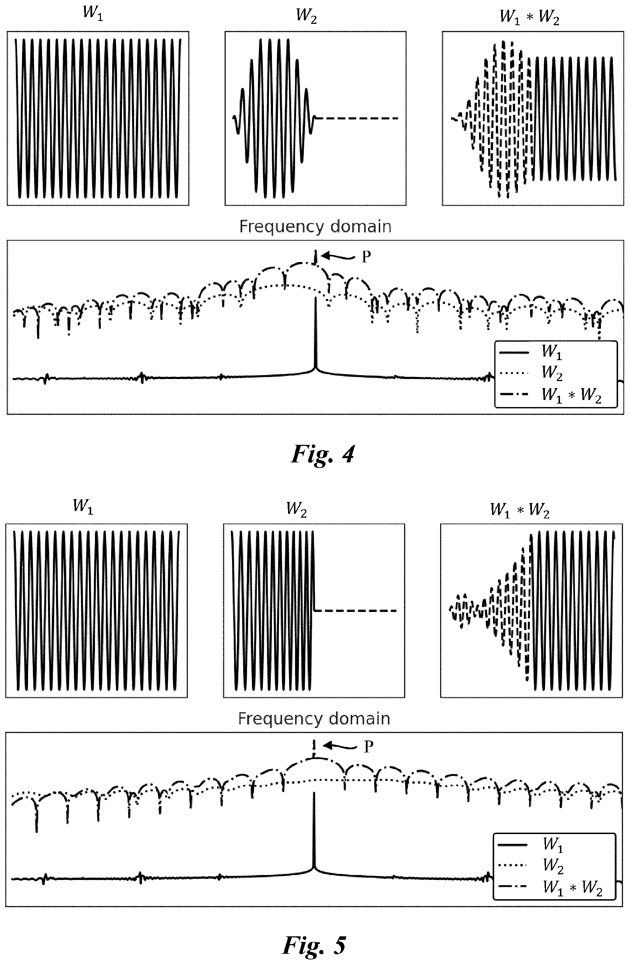

The first and second wavelet generators 6, 8 may be implemented in various manners. According to one example, the wavelet generation may be realized using a transceiver module as described in connection with Fig. 4 of the published PCT-application PCT/EP2011/058847 on page 11 lines 22-30. This implementation offers a low-complexity method for phase-coherent generation of UWB mmWave wavelets with a well-defined and fixed initial phase, a configurable duration / bandwidth, and substantially constant carrier frequency (at least after a transient initial period). The wavelet generation may however also be realized using other oscillator configurations, for example, by a pulse generator relying on negative differential conductance (e.g. provided by a cross-coupled differential pair) or positive feedback, where it is possible to start and quench the oscillations rapidly. Further example implementations include passing a continuous oscillation through a switchable amplifier, filtering of a baseband pulse, up-conversion of a baseband pulse, or using digital gates to create the desired waveform, as per se is known to the person skilled in the art.

The first and second wavelet generators 6, 8 may as indicated in Fig. 1 be configured to generate the respective wavelets $W_1$, $W_2$ (i.e. a respective instance thereof) responsive to (i.e. triggered by) a respective trigger signal T1, T2. The first and second wavelet generators 6, 8 may be triggered by an edge (e.g. a rising edge or a falling edge) of the respective trigger signal T1, T2. The wavelet duration may be pre-set or configured by supplying an analog signal or a digital control word to a control input of the respective wavelet generator 6, 8.

The electronic device 1 may as shown further comprise a timing circuit 4. The timing circuit 4 is configured to generate and output the first and second trigger signals T1 and T2 with a controllable relative timing or timing offset $\Delta$. The relative timing of the generation of the first and second wavelets $W_1$, $W_2$ may thus be controlled by controlling a relative timing of the trigger signals T1 and T2.

The timing circuit 4 may operate on basis of a reference clock Ref, e.g. provided by a voltage-controlled oscillator (VCO) or some other conventional clock source of the electronic device 1, or provided to the electronic device 1 from an external clock source. The timing circuit 4 may for example comprise counter circuitry configured to output the first trigger T1 and the second trigger T2 after a respective number of clock edges of the reference clock Ref.

Various implementations of trigger generating circuitry are possible, such as counter circuitry for counting edges of the clock signal Ref and generating the trigger signals T1 or T2 responsive to a trigger condition. The first and second trigger signals T1, T2 may for instance be generated by a respective Finite-State Machine (FSM), each comprising a counter circuit configured to count clock edges (e.g. leading and/or trailing) of the clock signal Ref and in response to a configurable number of clock edges (e.g. once every N edges received) provide the respective trigger signal T1 or T2. The FSM may comprise a register for storing state variables (e.g. the number N of clock edges defining the trigger condition, a pulse duration, etc.). The FSM may comprise a number of control inputs for receiving control signals (e.g. digital control words) for controlling the FSM and updating the register. An FSM may as per se is known in the art be implemented using a programmable logic device.

Higher precision delay control may be obtained by distributing the clock signal Ref along a first path associated with the first trigger signal generation T1 and a second path associated with the second trigger signal generation T2. A programmable delay (e.g. a delay line such as a tapped delay line, or some other conventional digital or continuous delay circuit) may be provided along one of the first or second paths to provide fine delay control between the respective clock signals propagating along the first and second paths. By way of example, state of the art delay circuits, such as tapped delay lines, may enable variable delay control with a resolution/step-size of about 0.5 ps or less. It is also possible to use separate and synchronized clocks sources for controlling the generation of the first and second triggers T1 and T2.

Still with reference to Fig. 1, the electronic device 1 comprises a mixer and integrator circuit 10 which in the illustrated implementation comprises a mixer 12 and an integrator 14. The mixer 12 is configured to perform mixing of a pair of input signals and output a mixing product M thereof. A first input of the mixer 12 is coupled to the output of the first wavelet generator 6 and hence configured to receive instances of the first wavelet $W_1$. A second input of the mixer 12 is coupled to the output of the second wavelet generator 8 and hence configured to receive instances of the second wavelet $W_2$. Hence, in response to a received instance of the first wavelet $W_1$ and a received instance of the second wavelet W2 being applied to the mixer inputs with a temporal overlap, output M of the mixer 12 will comprise the instantaneous mixing product (e.g. a mixed wavelet) of the overlapping portions of the $W_1$ and $W_2$ wavelet instances. Passive as well as active, balanced or unbalanced mixer implementations are possible, e.g. a Gilbert cell, a diode mixer or a passive field-effect transistor mixer.

The integrator 14 is meanwhile configured to integrate the mixing product M to output an integrated mixing product I. An input of the integrator 14 is coupled to the output of the mixer 12. The mixing product M (which for overlapping $W_1$ and $W_2$ instances will be an AC signal) may hence be converted to a representative DC signal or DC level. The integrator 14 may be implemented as a capacitive circuit, or an integrating OP-amp. In any case, an integration time of the integrator 14 may be configured to be equal to or greater than a maximum expected duration of the mixed wavelet of the mixing product $M$.

While in Fig. 1 the mixer and integrator circuit 10 comprises a dedicated mixing element 12 and a dedicated integrating element 10, it is also possible to realize the mixing and integration of the wavelet instances $W_1$ and $W_2$ in a common circuit portion or element providing, simultaneously, the mixing and integration function, e.g. a capacitive mixing circuit element or portion.

The electronic device 1 further comprises a sampling circuit, which in the illustrated example is implemented as an analog-to-digital converter (ADC) 16. An input of the ADC 16 is coupled to the output of the mixer and integrator circuit 10 (e.g. the output of the integrator 14). The ADC 16 is configured to convert each DC-level integrated mixing product $I$ to a digital sample $x$.

The electronic device 1 further comprises a signal processing circuit which in the illustrated example is implemented by a digital signal processor (DSP) 18. An input of the DSP 18 is coupled to an output of the ADC 16. As will be further described in connection with Fig. 2, the DSP 18 may process digital samples $x$ resulting from a sequence of "convolution measurements" to estimate the center frequency of the first wavelet $W_1$. The samples x as well as the final frequency estimate may be stored in a memory of the DSP 18. The DSP 18 may be implemented in dedicated circuitry, or in an application-specific integrated circuit (ASICs) or field-programmable gate arrays (FPGAs). However, the functionality of the DSP 18 may also be implemented by a microprocessor and a computer readable medium, such as a non-volatile memory, storing instructions implementing the processing operations.

Although not shown in Fig. 1, the electronic device 1 may comprise additional circuitry for adapting (e.g. amplifying or attenuating) the integrated mixing product $I$ prior to the ADC 16 to optimize the output level of the mixer and integrator circuit 10 with respect to the dynamic range of the ADC 16.

Fig. 2 is a flow chart of a method 20 for estimating a center frequency of a wavelet, which may be implemented by the electronic device 1. For the purpose of the following discussion, index $j$ is introduced to refer to a respective (convolution) measurement of a sequence of measurements $j = 1 ... M$. Hence, $x_j$ refers to sample $x$ of measurement $j$, that is the digitized representation of the integrated mixing product $I_j$ of measurement $j$.

The method 20 comprises performing a sequence of measurements $j = 1 ... M,$ wherein each measurement $j$ comprises:

- generating a respective instance of the first wavelet $W_1$ by the first wavelet generator 6 and a respective instance of the second wavelet $W_2$ by the second wavelet generator 8 with a respective timing offset $\Delta_j$;
- mixing and integrating the respective wavelet instances $W_1$ and $W_2$ by the mixer and integrator circuit 10 to obtain a respective integrated mixing product $I_j$; and
- sampling the integrated mixing product $I_j$ by the sampling circuit 16 to obtain a sample $x_j$.

Thus, in each measurement $j$, a sample $x_j$ representing a respective point of a convolution of the first and second wavelet $W_1$, $W_2$ is obtained. The samples $x_j$ may be output to the DSP 18 such that the DSP 18 iteratively obtains a sequence of samples $x_{j=1...M}$ to be further processed as set out in the following.

Assuming the propagation of the instances of the first and second wavelets $W_1$, $W_2$ between the respective wavelet generators 6, 8 and the mixer and integrator circuit 10 involves no losses or signal spread, and assuming the mixing and integration by the mixer and integrator circuit 10 is perfect, each sample $x_j$ is given by:

$$x_j = (W_1 * W_2)(\Delta_j) = \int_{-\infty}^{\infty} W_1(\tau) W_2(\Delta_j - \tau) d\tau$$

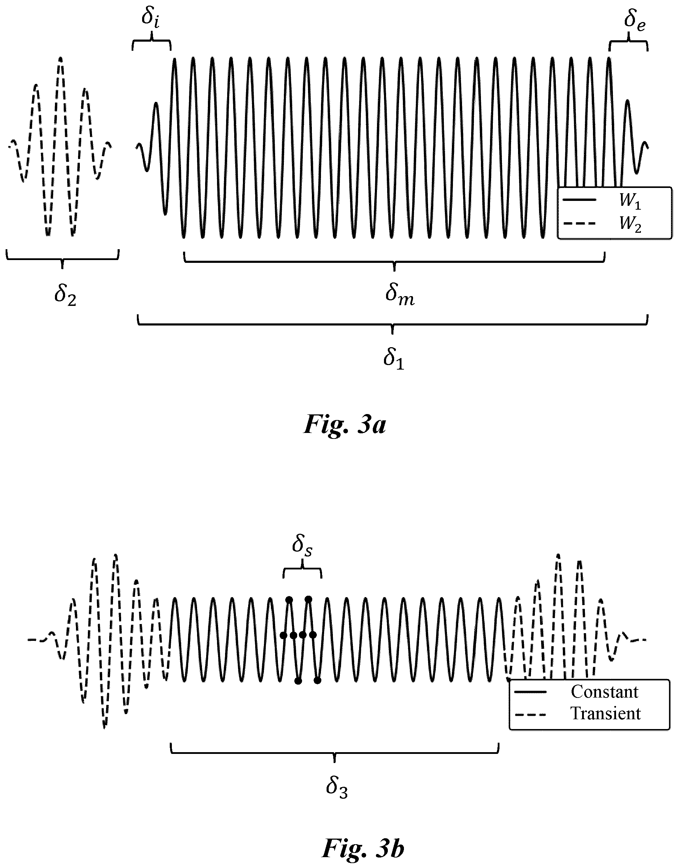

Fig. 3a shows example waveforms of the first and second wavelets $W_1$, $W_2$. The first wavelet $W_1$ has an initial or leading portion $\delta_i$ in which the amplitude of the wavelet increases from zero, an end or trailing portion $\delta_e$ in which the amplitude returns to zero, and a middle or intermediate portion $\delta_m$, between the leading and trailing portions. The total duration $\delta_1$ of the first wavelet $W_1$ is $\delta_1 = \delta_i + \delta_m + \delta_e$. The intermediate portion $\delta_m$ refers to a portion of the first wavelet $W_1$ in which at least the center frequency is substantially constant, and typically also the amplitude. The initial portion $\delta_i$ refers to the leading transient portion of the first wavelet $W_1$ in which its amplitude ramps up from zero. The end portion $\delta_i$ refers to the trailing transient portion of the first wavelet $W_1$ in which its amplitude reduces to zero. As would be appreciated by the skilled person, the term "amplitude of a wavelet" here refers to the amplitude of the modulation of the carrier (i.e. the amplitude of the envelope of the wavelet) rather than the oscillatory instantaneous amplitude of the carrier.

While the first wavelet generator 6 is able to coherently generate instances of the first wavelet $W_1$ (i.e. with a well-defined and fixed initial phase), the center frequency may during the initial and/or end portions $\delta_i$, $\delta_e$ be unstable, e.g. due to characteristics of the first wavelet generator 6. Therefore, as previously discussed, the samples of the convolution which may form the basis for a reliable and accurate center frequency estimate are those which are obtained by mixing the second wavelet $W_2$ with the middle / constant frequency portion $\delta_m$ of the first wavelet $W_1$. Accordingly, the duration $\delta_2$ of the second wavelet $W_2$ is smaller than the duration $\delta_m$ of the middle / constant frequency portion $\delta_m$ of the first wavelet $W_1$.

Furthermore, the timing offset $\Delta_j$ between the first and second wavelets $W_1$, $W_2$ is varied between the measurements $j$ such that each sample $x_j$ of the sequence of samples $x_{j=1...M}$ represents a respective point $\Delta_j$ within a portion of substantially constant center frequency ("constant frequency portion") of the convolution $(W_1 * W_2)$. The samples $x_j$ are thus obtained when the timing offset $\Delta_j$ between the first and second wavelets $W_1$, $W_2$ is such that the second wavelet $W_2$ overlaps the constant frequency portion $\delta_m$ of the first wavelet $W_1$, but neither the initial portion $\delta_i$ nor the end portion $\delta_e$. The timing offset $\Delta_j$ between the first and second wavelets $W_1$, $W_2$ may be varied between the sequence of measurements $j = 1 ... M$ such that the second wavelet $W_2$ presents a different overlap with (i.e. overlaps a different sub-portion of) the constant frequency portion $\delta_m$ of the first wavelet $W_1$ in each measurement. With reference to Fig. 3b, showing the waveform of the (full) convolution of the wavelets $W_1$, $W_2$ shown in Fig. 3a, the samples $x_j$ are thus obtained from the "Constant" portion $\delta_3$ of the convolution.

As discussed previously, the periodicity ($T_3$) and frequency ($f_3 = 1/T_3$) of the constant frequency portion $\delta_3$ of the convolution $(W_1 * W_2)$ will be substantially the same as the periodicity ($T_1$) and frequency ($f_1 = 1/T_1 = f_3$) of the constant frequency portion $\delta_m$ of the first wavelet $W_1$. The sequence of samples $x_{j=1...M}$ thus enables the center frequency of the first wavelet $W_1$ to be estimated, as further will be discussed below.

The number of samples obtained from the constant frequency portion $\delta_3$ (i.e. corresponding to the number of times the convolution measurements are iterated) typically depends on factors such as desired measurement accuracy, amount of processing resources available for storing and processing the samples, and the time available for performing the measurements. To obtain a reliable frequency estimate, it may however typically be beneficial that the sequence of samples $x_{j=1...M}$ spans at least one period of the constant frequency portion $\delta_3$ of the convolution. A greater span may both facilitate determining the time rate of change of the un-wrapped phase values (see below) and allow for averaging of the frequency estimate across a plurality of periods.

Correspondingly, the sample rate may depend on similar factors (e.g. measurement accuracy, available processing resources) but also on the demodulation approach used to estimate the phase. It is noted that due to the time-diluted sampling approach, the sample rate does here not correspond to the temporal rate (in real-time) at which the samples $x_j$ are obtained, but is rather given by the spacing of successive samples $x_j$, $x_{j+1}$ which is determined by the size of the time steps of $\Delta_j$ of the sequence of measurements $j = 1 ... M$. It is further contemplated that a non-uniform sampling rate may be used, wherein the sequence of samples $x_{j=1...M}$ may comprise a number of sub-sequences of samples, wherein a spacing (i.e. the time steps $\Delta_j$) between the samples of the respective sub-sequences is smaller than a spacing between the sub-sequences. As an example, the sequence of samples may span at least one period (advantageously at least two) of the constant frequency portion $\delta_3$ of the convolution and be acquired with a sample rate sufficient to avoid aliasing. Fig. 3b indicates one non-limiting example of a sequence of eight samples $x_{j=1...8}$ representing a sub-portion $\delta_s$ of the constant frequency portion $\delta_3$ of the convolution.

While, as discussed above, the samples relevant for the frequency estimation are those which represent / are obtained from the constant frequency portion $\delta_3$ of the convolution, the method does not preclude obtaining samples also from either of the transient portions of the convolution (dashed line waveform in Fig. 3b). Transient portions result when the second wavelet $W_2$ overlaps the leading or trailing transient portions of the first wavelet $W_1$. Sampling also the transient portions of the convolution may for instance be useful to determine the start and end points of the constant frequency portion $\delta_3$ (which for instance could be of interest for identifying the timing offsets $\Delta_{j=1...M}$ suitable for obtaining the actual samples $x_{j=1...M}$ of interest). However, samples from the transient portions may be ignored for the subsequent frequency estimation.

After the samples $x_{j=1...M}$ have been obtained, the method 200 proceeds by the DSP 18 estimating a sequence of instantaneous phase values $\phi_{j=1...K}$ from the sequence of samples $x_{j=1...M}$ (step S22). Estimating the instantaneous phase values $\phi_{j=1...K}$ may comprise estimating a sequence of $K$ in-phase ($I$) and quadrature-phase ($Q$) components (i.e. IQ-pairs) from the sequence of samples $\phi_{j=1...K}$. An instantaneous phase value may be estimated for each IQ-pairs (e.g. as the argument of the IQ-pair, arg ($I$, $Q$)). Any conventional IQ demodulation technique may be used. As would be understood by the skilled person, the number of $K$ of instantaneous phase values obtained will depend on the type of IQ demodulation technique and the number of samples $x_{j=1...M}$.

The method thereafter proceeds by the DSP 18 subjecting the sequence of instantaneous phase values $\phi_{j=1...K}$ to phase-unwrapping to obtain a sequence of un-wrapped phase values $\psi_{j=1...L}$ (step S23). The number of un-wrapped values $\psi_{j=1...L}$ may typically be equal to the number of instantaneous phase values $\phi_j$, i.e. $L = K$. Phase-unwrapping may for instance, as per se is known in the art, be implemented by adding multiples of $\pm 2\pi$ when consecutive instantaneous phase values of the sequence $\phi_{j=1...K}$ is equal or greater than $\pi$ to reduce the difference to less than $\pi$.

Subsequent to estimating the estimating the sequence of un-wrapped phase values $\psi_{j=1...L}$ the DSP 18 estimates the center frequency $f_1$ of the first wavelet $W_1$ by determining the time rate of change of the sequence of un-wrapped phase values $\psi_{j=1...L}$. As an example, the center frequency $f_1$ of the first wavelet $W_1$ in the example of Fig. 3a may be estimated by calculating the difference between any two un-wrapped phase values obtained from the sequence of samples $x_{j=1...8}$ representing a sub-portion $\delta_s$ of the convolution in Fig. 3b and dividing the difference with the size of the time step between the un-wrapped phase values. If more than two un-wrapped phase values are available, two or more preliminary frequency estimates may be calculated as per the above, and subsequently be averaged to obtain a final frequency estimate.

The DSP 18 may store the frequency estimates in a memory of, or connected to, the DSP 18 for retrieval and/or further processing, and/or output to peripheral circuitry via a communication bus of the electronic device 1. As an example, the DSP 18 may compare the frequency $f_1$ of the first wavelet $W_1$ to a reference frequency or reference frequency band to determine whether the frequency $f_1$ of the first wavelet $W_1$ is within a tolerance.

If the electronic device 1 comprises a first wavelet generator 6 with a tunable resonance frequency (e.g. the carrier of the first wavelet W1 may be generated by a voltage-controlled oscillator), the resonance frequency may be tuned responsive to the estimated center frequency deviating from the reference frequency or reference frequency band such that the center frequency $f_1$ is tuned within a tolerance of the reference frequency or band. This may be performed as an iterative process (e.g. iteratively: estimating $f_1$, comparing $f_1$ to the reference frequency or band, and tuning the resonance frequency) wherein the center frequency $f_1$ may be tuned to iteratively approach the reference frequency or band (e.g. approach the center frequency of the reference band).

As mentioned above, the intermediate portion $\delta_m$ of the first wavelet $W_1$ presents a substantially constant frequency. The term "substantially constant" may here be understood in light of the fact that even an oscillatory signal with a limited temporal extent will have a certain non-zero width in the frequency domain. Hence, even between the transient portions $\delta_i$ and $\delta_e$ of the first wavelet $W_1$, in the intermediate portion $\delta_m$ the center frequency $f_1$ may only be determined within a certain precision which in the end is limited among others by the duration $\delta_m$. Accordingly, the peak in the spectrum of the first wavelet $W_1$ which corresponds to the center frequency may have a non-zero bandwidth. In some implementations, the center frequency may vary by at most 5%, or at most 2% or at most 1% during the intermediate portion $\delta_m$. Assuming the first wavelet $W_1$ is a mmWave wavelet, the center frequency $f_1$ may for example lie within a band of width 1 GHz or less, such as 0.5 GHz or 0.1 GHz.

As further mentioned above, the intermediate portion $\delta_m$ of the first wavelet $W_1$ may also present a substantially constant amplitude. This may improve the precision of the frequency estimation since an amplitude modulation within the intermediate portion $\delta_m$ of the first wavelet $W_1$ will manifest itself as a (further) broadening of the peak corresponding to the center frequency $f_1$. In general, an amplitude variation of at most 5%, or at most 2% or at most 1% may be considered as substantially constant within the measurement tolerances of the present frequency estimation method. That said, even greater amplitude variations may be tolerable in some instances, e.g. if there are greater error sources within the measurement which anyway mask the broadening due to the amplitude modulation.

To ensure the non-overlapping relationship of the second wavelet $W_2$ with the leading and trailing portions $\delta_i$ and $\delta_e$ of the first wavelet $W_1$ for all samples of the sequence $x_{j=1...K}$, the duration $\delta_2$ of the second wavelet $W_2$ is smaller than the duration of the middle portion $\delta_m$ of the first wavelet $W_1$ by an amount such that that the second wavelet $W_2$ does not overlap the leading and trailing portions $\delta_i$ and $\delta_e$ for any of the timing offsets $\Delta_{j=1...K}$. However, there is in no requirement on a substantially constant center frequency or amplitude for the second wavelet $W_2$. Accordingly, various designs of the second wavelet $W_2$ are compatible with the frequency estimation method. However, it has been realized that it may be advantageous that the frequency spectrum of the second wavelet $W_2$ comprises a lobe or peak overlapping (i.e. comprising) the center frequency $f_1$ of the first wavelet $W_1$ which is to be estimated. The lobe or peak may advantageously be a main lobe or main peak of the frequency spectrum of the second wavelet $W_2$ as this allows the portion of the spectrum of the second wavelet $W_2$ comprising the greatest energy to be mixed into the samples $x_j$. However, also side lobes or secondary peaks may be used provided they include a substantial energy.

Fig. 4 schematically shows an example of a time-domain waveform (upper right) of the convolution of a first wavelet $W_1$ with a square modulation and a second wavelet $W_2$ with a triangular modulation. For simplicity the first and second wavelets $W_1$, $W_2$ are both modelled as modulated sinusoids, however with slightly different carrier (center) frequencies. Consistent with Fig. 3b, the dashed portion of the waveform of the convolution indicates the transient portion and the solid line portion indicates (part of) the constant frequency portion. As seen in the frequency spectrum at the bottom of the figure, the spectrum of the second wavelet $W_2$ comprises a main lobe overlapping the carrier of the first wavelet $W_1$, in particular surrounding the carrier at either side. This produces a peak (P) in the frequency spectrum of the convolution at the carrier frequency of the first wavelet $W_1$, allowing the center/carrier frequency of the first wavelet $W_1$ to be estimated. This may be understood considering that the triangular modulation broadens the spectrum of the second wavelet $W_2$ such that an overlap with the carrier frequency of the first wavelet $W_1$ is achieved.

Fig. 5 schematically shows a further example corresponding to the example of Fig. 4 but for a second wavelet $W_2$ with a square modulation and a frequency chirp (i.e. frequency sweep). The frequency chirp produces a distinct and broad main lobe in the frequency spectrum of the second wavelet $W_2$, overlapping the carrier of the first wavelet $W_1$ on either sides. This produces a peak (P) in the frequency spectrum of the convolution at the carrier frequency of the first wavelet $W_1$, allowing the center/carrier frequency of the first wavelet $W_1$ to be estimated.

Common for the examples of Fig. 4 and Fig. 5 is that the frequency spectrum of the second wavelet $W_2$ comprises

a band (i.e. a continuous frequency range) with non-zero energy overlapping the center frequency of the first wavelet $W_1$. While Fig. 4 shows an idealized triangular envelope of the second wavelet $W_2$, it is to be noted that also less ideal triangular amplitude modulations may produce equally useable results. For instance, the rise and fall times of the edges of the envelope may be different, and/or need not increase/decrease strictly linearly. It is further contemplated that a second wavelet $W_2$ with a substantially trapezoidal envelope may be used. Furthermore, a frequency chirp also with non-square envelopes may be used, such as substantially triangular or trapezoidal. It is also possible to use frequency chirps with either increasing or decreasing frequency.

Referring again to Fig. 1, the control signals needed to cause the electronic device 1 to perform the method described above, as well as the various control signals needed for controlling the timing circuit 4, the wavelet generators 6, 8, the ADC 16 and the DSP 18, etc. may be provided by a controller 20 of the electronic device 1. The controller 20 may e.g. be implemented in dedicated circuitry, an ASIC or an FPGA. A main controller may alternatively be implemented by a dedicated microcontroller, or by a microprocessor in combination with a computer readable medium, such as a non-volatile memory, storing instructions for causing the microprocessor to provide the control signals etc. to the electronic device 1.

The frequency estimation method set out above may be used in various applications, including various types of electronic devices. Referring again to Fig. 1, the electronic device 1 may for instance be configured as a radar device, such as an UWB mmWave radar device.

The first wavelet generator 6 may for instance form part of a transmitter of the radar device 1. In a radar measurement, the radar device 1 may transmit wavelets generated by the first wavelet generator 6. The wavelets may be transmitted towards a radar target via an antenna 2 of the radar device 1 (e.g. a directional antenna such as a dipole antenna, a Yagi antenna or a phased array antenna). Radar returns reflected by a radar target may be received and processed by a receiver of the radar device 1 using techniques which per se are known in the art. For instance, radar returns comprising reflected wavelets may be received (e.g. via the antenna 2 or via a separate antenna of the receive part) and sampled. The radar samples may be processed to measure parameters such as time-of-flight, amplitude and/or phase. The radar returns may be sampled using any suitable existing techniques, such as time-diluted sampling of a sequence of radar returns from a sequence of coherently generated wavelets, or direct / real-time sampling of each radar return (provided the sampling circuit of the receiver has a sufficient bandwidth).

In a gesture detection application the radar target may be a hand or a finger of a user locate in relative proximity to an electronic device (e.g. a tablet computer, a laptop computer, a media player, a smart watch, headphones or some other electronic device implementing a radar-based contactless user interaction). In an autonomous robot application (e.g. a cleaning robot, a lawn mower robot, a drone), the radar target may be a structure such as a wall or some obstacle whose presence and/or position may be relevant for a movement decision by the autonomous robot. In a surface scanning application the radar target may be a surface of interest (e.g. a surface traversed by a robot). These examples of applications and radar targets are however merely non-limiting examples and many other types of applications and radar targets are possible.

The first wavelet generator 6 may also or alternatively form part of a receiver of the radar device 1, wherein the first wavelet generator 6 may generate reference or template wavelets for use in time-diluted sampling of radar returns.

The second wavelet generator 8 may on the other hand have a function only, or at least, in connection with the wavelet frequency estimation of the first wavelets $W_1$. That is, the second wavelet generator 8 need not be used during actual radar measurements but only when the frequency of the first wavelet $W_1$ is to be estimated.

The person skilled in the art realizes that the present invention by no means is limited to the embodiments and examples described above. On the contrary, many modifications and variations are possible within the scope of the appended claims. For example, while reference in the above was made specifically to radar applications, the methods of the present disclosure may be used also in transmitters or other signal processing systems, such as data modulation in communication devices.

**Claims**

1. A method for estimating a center frequency of a wavelet ($W_1$), the method comprising:

   performing a sequence of measurements to obtain a sequence of samples, wherein each measurement comprises obtaining a respective sample (x) of a convolution of a first wavelet ($W_1$) generated by a first wavelet generator (6) and a second wavelet ($W_2$) generated by a second wavelet generator (8),

   wherein the first wavelet ($W_1$) is the wavelet whose center frequency is to be estimated and comprises an initial portion ($\delta_i$) having an increasing amplitude, an end portion ($\delta_e$) having a decreasing amplitude, and a middle portion ($\delta_m$) having a substantially constant center frequency,
   wherein the second wavelet ($W_2$) has a duration smaller than a duration of the middle portion ($\delta_m$) of the first

wavelet ($W_1$), and

wherein a timing offset between the first and second wavelet ($W_1$, $W_2$) is varied between the measurements such that each sample ($x$) represents a respective point of the convolution, and such that the sequence of samples represents a portion of substantially constant center frequency of the convolution;

estimating a sequence of instantaneous phase values from the sequence of samples;
unwrapping the sequence of instantaneous phase values to obtain a sequence of un-wrapped phase values; and
estimating the center frequency of the first wavelet as the time rate of change of the sequence of un-wrapped phase values.

2. The method according to claim 1, wherein each measurement of the sequence of measurements comprises:

generating the first wavelet ($W_1$) by the first wavelet generator (6) and the second wavelet (8) by the second wavelet generator ($W_2$);
mixing and integrating the first wavelet ($W_1$) and the second wavelet ($W_2$) to obtain an integrated mixing product ($I$); and
sampling the integrated mixing product ($I$) to obtain a sample ($x$).

3. The method according to any one of the preceding claims, wherein the timing offset between the first and second wavelets ($W_1$, $W_2$) is varied between the sequence of measurements such that the second wavelet ($W_2$) presents a different overlap with the middle portion ($\delta_m$) of the first wavelet ($W_1$) in each measurement.

4. The method according to any one of the preceding claims, wherein the timing offset is varied over a range such that the sequence of samples spans at least one period of the convolution.

5. The method according to any one of the preceding claims,
wherein estimating the sequence of instantaneous phase values comprises estimating a sequence of in-phase and quadrature-phase components from the sequence of samples.

6. The method according to any one of the preceding claims, wherein the middle portion ($\delta_m$) of the first wavelet ($W_1$) further has a substantially uniform amplitude.

7. The method according to any one of the preceding claims, wherein the first wavelet generator (6) has a configurable duration.

8. The method according to any one of the preceding claims, wherein a frequency spectrum of the second wavelet ($W_2$) comprises a band overlapping the center frequency of the first wavelet ($W_1$).

9. The method according to any one of the preceding claims, wherein the second wavelet ($W_2$) presents a substantially triangular or trapezoidal envelope, or wherein the second wavelet ($W_2$) comprises a frequency-chirp.

10. The method according to any one of the preceding claims, further comprising tuning a resonance frequency of the first wavelet generator (6) responsive to the estimated center frequency deviating from a reference frequency or reference frequency band.

11. The method according to any one of the preceding claims, wherein the first and second wavelet generators (6, 8) are comprised in a radar device (1).

12. The method according to claim 11, wherein the first wavelet generator (6) is configured to generate a wavelet for transmission from the radar device (1).

13. An electronic device (1) comprising:

a first wavelet generator (6);
a second wavelet generator (8);
a sampling circuit (16);
wherein the electronic device (1) is configured to perform a sequence of measurements to obtain a sequence of samples, wherein each measurement comprises obtaining, by the sampling circuit (16), a respective sample ($x$)

of a convolution of a first wavelet ($W_1$) generated by the first wavelet generator (6) and a second wavelet ($W_2$) generated by the second wavelet generator (8),

wherein the first wavelet ($W_1$) is the wavelet whose center frequency is to be estimated and comprises an initial portion ($\delta_i$) having an increasing amplitude, an end portion ($\delta_e$) having a decreasing amplitude, and a middle portion ($\delta_m$) having a substantially constant center frequency,

wherein the second wavelet ($W_2$) has a duration smaller than a duration of the middle portion ($\delta_m$) of the first wavelet ($W_1$), and

wherein a timing offset between the first and second wavelet ($W_1$, $W_2$) is varied between the measurements such that each sample ($x$) represents a respective point of the convolution, and such that the sequence of samples represents a portion of substantially constant center frequency of the convolution;

the electronic device (1) further comprising a signal processing circuit (18) configured to:

estimate a sequence of instantaneous phase values from the sequence of samples;
unwrap the sequence of instantaneous phase values to obtain a sequence of un-wrapped phase values; and
estimate the center frequency of the first wavelet as the time rate of change of the sequence of unwrapped phase values.

14. The electronic device (1) according to claim 13, further comprising a mixer and integrator circuit (10), and wherein each measurement comprises:

generating the first wavelet ($W_1$) by the first wavelet generator (6) and the second wavelet ($W_2$) by the second wavelet generator (8);
mixing and integrating the first wavelet ($W_1$) and the second wavelet ($W_2$), by the mixer and integrator circuit (10), to obtain an integrated mixing product ($I$); and
sampling, by the sampling circuit (16), the integrated mixing product ($I$) to obtain a sample ($x$).

15. The electronic device according to any one of claims 13-14, wherein the electronic device is a radar device (1).

**Fig. 1**

**Fig. 2**

**Fig. 3a**

**Fig. 3b**

**Fig. 4**

**Fig. 5**

**EUROPEAN SEARCH REPORT**

Application Number

EP 23 19 9885

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/066537 A1 (AAI CORP [US]; JAKLITSCH JAMES J [US]) 5 June 2008 (2008-06-05) * page 1, line 5 - page 3, line 20 * * page 5, line 22 - page 6, line 12 * * page 7, line 7 - page 10, line 15 * * page 12, line 24 - page 13, line 18 * * figures 1,3,5,7A-8B,11 * | 1-15 | INV. G01S7/282 G01S7/40 G01S13/02 |
| A | SHAMIK SARKAR ET AL: "RadYOLOLet: Radar Detection and Parameter Estimation Using YOLO and WaveLet", ARXIV.ORG, CORNELL UNIVERSITY LIBRARY, 201 OLIN LIBRARY CORNELL UNIVERSITY ITHACA, NY 14853, 21 September 2023 (2023-09-21), XP091619835, * Sections I, III; figure 1 * | 1-15 | |
| A | CN 105 022 036 B (UNIV CHENGDU INF TECHNOLOGY) 23 February 2018 (2018-02-23) * paragraphs [0036] - [0061] * | 1-15 | TECHNICAL FIELDS SEARCHED (IPC) G01S |
| A | CN 106 526 566 A (724TH RES INST CN SHIPBUILDING) 22 March 2017 (2017-03-22) * paragraphs [0027] - [0029]; claim 1 * | 1-15 | |
| A | EP 4 187 280 A1 (ACCONEER AB [SE]) 31 May 2023 (2023-05-31) * paragraphs [0006] - [0046]; figures 1,2 * | 1-15 | |

The present search report has been drawn up for all claims

| Place of search | Date of completion of the search | Examiner |
|---|---|---|
| Munich | 16 February 2024 | Reeck, Guido |

EPO FORM 1503 03.82 (P04C01)

## ANNEX TO THE EUROPEAN SEARCH REPORT
## ON EUROPEAN PATENT APPLICATION NO.

**EP 23 19 9885**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-02-2024**

| Patent document cited in search report | Publication date | Patent family member(s) | Publication date |
|---|---|---|---|
| WO 2008066537 A1 | 05-06-2008 | NONE | |
| CN 105022036 B | 23-02-2018 | NONE | |
| CN 106526566 A | 22-03-2017 | NONE | |
| EP 4187280 A1 | 31-05-2023 | EP 4187280 A1 | 31-05-2023 |
| | | WO 2023094610 A1 | 01-06-2023 |

EPO FORM P0459

For more details about this annex : see Official Journal of the European Patent Office, No. 12/82

**REFERENCES CITED IN THE DESCRIPTION**

**Patent documents cited in the description**

- EP 2011058847 W